# EUROPEAN PATENT APPLICATION

(11) **EP 4 426 018 A1**
(43) Date of publication of application: **04.09.2024**
(21) Application number: 23159359.1
(22) Date of filing: 01.03.2023
(51) Int. Cl.: H04W 52/02, H04W 48/18, H04L 47/80, H04L 41/0833

(54) **TECHNIQUES TO REDUCE ENERGY EMISSION OF A SERVICE**

(71) Applicant: Deutsche Telekom AG, 53113 Bonn (DE)
(72) Inventor: LAUSTER, Reinhard, St. Pölten (AT)
(74) Representative: Braun-Dullaeus Pannen Emmerling Patent- & Rechtsanwaltspartnerschaft mbB

(57) **Abstract**

Techniques reducing energy emissions of a service used by a user, wherein the method comprises the following steps:
• providing a requirement profile related to a service to a network operator and/or towards a service provider by a user, wherein the requirement profile comprises a QoD part and an energy profile part;
• offering a service to a UE, wherein the service offer matches the requirement profile.

## Description

The invention relates to a method, a UE and a network designed to reduce energy emission of a service.

The awareness in our society with respect to energy saving techniques becomes more and more important. Due to the ongoing electrification of almost all aspects in our daily lives that typically goes along with the wish to use "green", i.e. renewable, energy resources. It becomes more and more important to save energy whenever possible.

Especially for future 5G and 6G networks, energy-saving techniques are considered as a major issue. For EU founded research activities like "Horizon 2020 smart networks and services" energy-saving is a major issue. Nevertheless, this also applies to current 4G, Wi-Fi and fixed network systems. In particular, it is the goal of the EU to enable massive digital green transition towards low carbon footprint of vertical industries.

A key part to reach those emission goals is the reduction of energy consumption of all users.

Current 5G and future 6G networks can provide communication capabilities by means of different network slices, wherein each of the network slices can enable different quality of service (QoS) values. Hence, there is an ongoing trend that network slices can be ordered by customers directly with respect to predefined quality on demand (QoD) values by using exposed APIs (Application Programming Interface) to communicate the QoD ordering. The network operator can then adjust components of the radio network and/or the core network according to those QoD orders. Those APIs are designed for simplifying the QoD ordering processes by the customer. The customer can request network slices to fulfill his needed quality of experience (QoE) with respect to different services like video producing, gaming, computational tasks, latency requirements and/or communication tasks. The network slices can be predefined by the network operator and network resources to serve against the B2C and customer demands.

However, at the moment such QoD ordering processes do not take energy emission parameters into account.

Hence, it is the task of the invention to provide techniques so that QoD ordering processes take emission and/or energy aspects into account in order that "greener" services can be provided. Greener means within the context of this invention that the energy emissions of the used service can be reduce.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

When this text talks about energy emissions, this term comprises energy consumption and/or emission of CO2 and/or an abstracted energy class. So, within the context of this invention it is to be understood that even a service that is being provided with a totally renewable energy source, like wind energy, can reduce its energy emission if it is implemented on a server that requires less energy. That the switching from a coal based energy source to a wind energy source results in a reduction of energy emission, should be totally clear. Typically, the service is provided via the data plane of the network operator - in that sense, the service can be called a data service. Hence, it is to be understood that the service is not restricted to only provide services related to data but to various kinds of services that can be requested over a data connection or over a communication link.

According to a first aspect of the invention, a method to reduce energy emissions of a service used by a UE over a telecommunication network (user equipment) is disclosed, wherein the method comprises the following steps:
- providing a requirement profile related to a service to a network operator and/or to a service provider, wherein the requirement profile comprises a QoD part and an energy profile part;
   ∘ the requirement profile can be provided by the user by means of his UE and/or via a web interface of the network operator and/or the service provider. The UE and/or web interface is configured so that the user can specify at least one requirement profile related to the service. The requirement profile shall be related to a certain service because in general, different services will show different requirement profiles;
   ∘ the service can be provided only by the network operator or in a distributed fashion also by the service provider, wherein the network operator provides at least the telecommunication network necessary to exchange data between the service provider and the UE;
   ∘ in particular, the requirement profile can be transmitted via a communication link of the network operator;
   ∘ the network operator can store the requirement profile in the database so that the network operator can reuse the requirement profile every time the user requests the service;
- offering a service to the UE, wherein the service offer matches the requirement profile.
   ∘ The service can be offered via a communication link directly to the UE or to the customer via the web interface;
   ∘ the UE can be a smart phone, a tablet, a computer, a household machine or even a vehicle like a car; vehicles can use such services for tele-operated and/or autonomic driving services;

The UE can start the service after it receives the service offer. The method provides the advantage that the requirement profile comprises for the first time an energy profile part that is being taken into account when offering the service to the UE. Hence, it is possible for the first time to consider energy emission aspects so that a service is being offered that is "greener" than previous services while it is being assured at the same time that the user receives the needed QoS values and can safely run the service.

An algorithm implemented on a server of the network operator/and the service provider can evaluate the requirement profile and assess if an already existing implementation of the service matches the requirement profile. In this case, this implementation can be offered to the UE. If there is currently no implementation existing that matches the requirement profile, the network operator and/or service provider can assemble the operational units, QoS parameters and/or functions of the service accordingly to match the requirement profile. For that purpose, the network operator and/or the service provider have knowledge about the energy emission and/or the performance of the operational units and/or network functions when running the service in case of certain QoS parameters. This knowledge can be assessed due to algorithms implemented servers of the network operator/the service provider and/or based on measured historic data related to the QoD values of the service. The algorithms can comprise functions that the state of the energy emission of a certain network unit with respect to a certain QoS value. For example, the energy consumption of a communication link with respect to the bandwidth E = E_{communication link}(bandwith).

In an embodiment, the method also comprises the step of requesting the service towards the network operator and/or towards the service provider by the UE. This step can be performed before, after or at the time of providing the requirement profile to the network operator and/or the service provider. The service can be requested by a user who operates the user equipment. The service can be a service like video producing, gaming, computational tasks, latency requirements, and/or communication tasks. The network operator provides at least the communication means to transfer data of the service between the UE and the service.

In an embodiment, the network operator and/or the service provider selects and/or optimizes the following units and/or functionalities of a telecommunication network that provide the service to match the requirement profile
- a radio technology used to exchange data relating to the service,
   ∘ the radio technology can comprise 4G, 5G, 6G, MIMO usage, Wifi, and/or QoS parameter;
   ∘ different radio technologies require different levels of energy to provide the data related to the service to the user equipment. For example, in general a Wi-Fi communication link requires less energy compared to a cellular link;
- core network elements like servers, data center resources, overbooking, sharing;
- location of deployment like edge deployment, local break out, deployment, availability of "green" energy for a location of specific servers, data centers or radio means;
- computational power like local cluster over a provisioning, and/or
- energy sources. It can be possible to switch the energy source of an operational unit.

This has the technical effect that the network operator and/or the service provider can each have different energy emissions. Those options can be combined in order to match the requirement profile. The different options provide a greater flexibility to combine the operational units accordingly.

To match the requirement profile it is not only possible to adjust and/or select the operational units involved in providing the service but also QoS performance parameters related to the service. Even if operational units are not being changed, it lowers the energy emission in general if the QoS parameters are being lowered. The following QoS can be adjusted for the purpose to match the requirement profile:
- bandwidth,
- latency, in particular an E2E latency between the UE and the endpoint of the service,
- resolution, and/or
- frame rate.

In an embodiment, the network operator and/or the service creates a network slice of the telecommunication network to match the requirement profile. The network slice can be considered as being the technical realization of providing the service to the UE. The concept of network slicing of 5G and 6G that will be explained below, enables the network operators to tailor the network slices to the needs of the user or according to the requirement profile by the ability of composing and creating the slice individually on demand. This concept provides a great flexibility and is able to also consider energy considerations that are stated in the energy profile part. If the user wants to run the service using a 4G communication technique, he has no choice but to use a technical realization of the service that was already made available by the network operator. Such technical realizations are not tailored to the distinct service so that computational resources are generally wasted because the technical realization must always be as good as the required QoS values of the service. Hence, the possibility to dynamically create new network slices that match the requirement profile make the 5G or 6G slicing technology especially advantageous to match the requirement profile and to consider energy aspects for the first time when providing a network based service to the customer. It is also possible to dynamically expose the emissions for the user in the form of a notification. This enables the user to select service depending on different sustainability requirements. The creation of the network slices can be supported by artificial intelligence that has been trained with appropriate data sets. For the training the following data sets can be used: an input a data set of a requirement profile and slices, wherein a composition of the slice that matches the requirement profile has been marked as being correct and that a slice that does not match the requirement profile has been marked as being wrong.

In an embodiment, the creation of the network slice includes setting up and/or arranging functions of the slice in order to match the requirement profile. 5G and/or 6G network slices also rely on the concept of virtualization, wherein software modules can be set up to fulfill functional tasks of network units. Setting up those functions and/or arranging those functions at various locations within the network of the network operator enables a great flexibility to tailor the slice to the needs of the QoD and at the same time take the energy requirements into account. For example, many functionalities can be set up on a server that receives its energy from renewable energy sources.

In an embodiment, notification means signal the availability of slices, in particular of the newly created slices, to the UE, to a web-portal and/or to the UE of other users together with the energy profile for slice.

This provides the advantage that newly created slices are being signaled to other users so that these users can simply use an existing slice if it matters his requirement profile. A library of available slices related certain services can therefore continually grow and can be used by basically all users that are allowed to use services of the network operator by a contractual agreement. It is of advantage, if the slices are grouped according to different service categories so that users find a slice that corresponds to their service more easily. This has the rational, that different services can require different network slices, in particular different QoS values.

In an embodiment, new slices, in particular further new slices, are created and/or adapted to dynamically upscale or downscale the QoS performance parameters of the slice for service. This provides the effect that the QoS performance can be adapted on energy aspects while running the service. For example, the requirement profile requires regarding the bandwidth or computational power of the service a range of values, wherein the user only wants to use the best performance value if it is in accordance with the energy requirements. Especially in the case of renewable energies, it can happen that the server on which at least some of the task of the service are being executed receives a fluctuating amount of energy from the renewable energy source. Hence, if wind and/or solar energy output increase, it is possible to dynamically increase the bandwidth and/are the computational power because those values are in accordance with the energy profile part at this point of time even if they weren't when the service was started.

In an embodiment, the QoD part comprises
- bandwidth values,
- latency values, in particular a E2E latency,
- resolution values,
- frame rate values, and/or
- a time window values, wherein the time window values can specify how long the execution of the service shall take and/or when the execution shall be started.

An individual combination of the parameters of the QoD part enable to tailor the operational units of the service, in particular the network slice that the service uses, to the requirements of the user regarding the service.

In an embodiment, the QoD part values are minimum values and/or ranges. If the QoD part values are minimum values than the network slice needs to be adapted and/or created in order to ensure that the performance of the network slice is sufficient to fulfill those QoD part values. If the QoD part values are stated as a range of values, for example that the bandwidth can be between 50 Mbit/s and 75 Mbit/s, this enables to create the slice in a very flexible manner in order to meet the requirements of the energy profile part. For example, the best possible performance values can be used in cases when the underlying operational units only use energy from renewable sources, while minimum performance values are used if the respective operational units do not use green energy. In principle, providing the QoD part is a range of values yields in more degrees of freedom when creating the network slice.

In an embodiment, the time window value specifies when the service has to be finished. This has the advantage that it is possible to delay the start of the service to times when it is expected that the energy profile part will be fulfilled or will be fulfilled even better. This is especially advantageous for services that need not to be executed at a certain time point.

In an embodiment, the energy profile part comprises
- emission budget,
   ∘ it is possible to allow only a certain emission budget regarding a QoS values of a service. If this emission budget is being trespassed, then the service can be stopped or the QoS values can be lowered dynamically, in particular by creating an appropriate new network slice. This has the technical effect that the emissions can be limited.
- energy consumption per service,
   ∘ the operational units, in particular the network slice, can be adjusted to allow only certain energy consumption per service.
- CO2 output,
   ∘ the operational units, in particular the network slice, can be adjusted to allow only certain CO2 output per service. A decrease of the CO2 output is possible when using operational units that receive they energy from renewable energy sources and/or to lower the QoS performance of the network slice;
- energy budget,
- energy sources, and/or
   ∘ it can be specified that the service shall not or shall use certain energy sources. For example, it is possible to forbid nuclear power energy for the service.
- energy mixture.
   ∘ the energy mixture can specify how the energy sources that are used by the service contribute to the total energy amount. For example, it is possible to specify that 75% of the energy used by the service shall come from renewable energy sources, while 25% can come from nuclear power energy.

This enables to define a very flexible energy part of the requirement profile. It is even possible to specify if certain specifications of the energy profile shall be met or must be met.

In an embodiment, the provided service matches the requirement profile at a certain time point. Due to the fluctuating nature of the energy output of renewable energy sources, it can happen that is not possible that the service can be run matching the requirement profile at an arbitrary time. In particular, the provided service matches the requirement profile at the time when the services is being offered to the user so that the user can start the service at that time point. However, it is also possible to use historic data to estimate further time points, when the requirement profile is being fulfilled, too. This enables that the user can start the service at those time points.

According to a second aspect of the invention, a UE is disclosed that is configured to provide a requirement profile related to a requested service to a network operator and/or towards a service provider, wherein the requirement profile comprises a QoD part and an energy profile part. For that purpose, it is possible that the UE comprises a communication interface to communicate with an appropriate API of the network operator. The UE can also be configured to request the offered service and/or to display the energy profile of the offered service.

This provides the advantage, that the UE can be used to communicate the requirement profile of the service to the network operator. The UE can be a smart phone, a tablet, a computer, a household machine or even a vehicle like a car; vehicles can use such services for tele-operated and/or autonomic driving services.

According to a third aspect of the invention, a network, in particular a telecommunication network of a network operator, is being disclosed, wherein the network is configured
- to obtain a requirement profile related to a service, wherein the requirement profile comprises a QoD part and an energy profile part;
- to offer offering a service to a UE, wherein the service offer matches the requirement profile.

Hence, such network offers basically the same advantages as described within the context of the method. The network can be configured to execute the steps of the method described above, if those method steps are technically related to the network.

In an embodiment, the network is a 5G network and/or 6G network and/or a future network and is configured to create a new network slice that matches the requirement profile.

The network can comprise a radio access network (RAN) part and a core part with the typical network entities like servers, databases, interfaces, communication links, and/or base stations. In particular, the network comprises dedicated API interfaces to obtain the requirement profile. Algorithms can be implemented on servers of the network to analyze the requirement profile and to set up the service accordingly to matches the requirement profile. In particular, the network is being configured to create a new network slice that matches the requirement profile. As illustrated before, 5G and/or 6G enables a great flexibility in providing the service according to the requirement profile. In particular, if the service operator is a further network operator is possible that both the network operator and the further network operator set up a common network slice that matches the requirement profile.

In the following, preferred implementation examples of the present invention are explained with reference to the accompanying figure:
- Fig. 1:: shows a method according to the invention;
- Fig. 2:: shows a requirement profile related to service;
- Fig. 3:: shows a communication system according to the invention;
- Fig. 4:: shows a systematic overview of a 5G communication environment;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

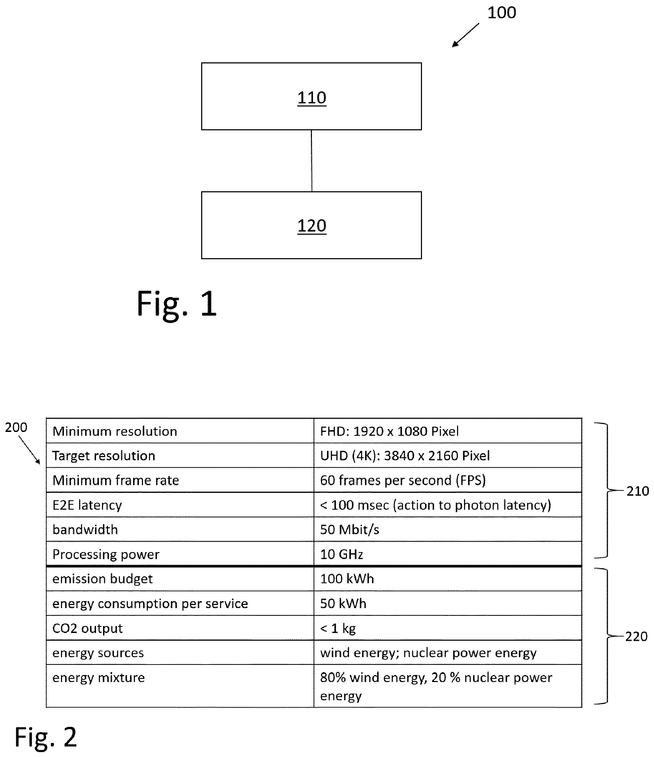

Fig. 1 shows a method 100 to reduce energy emissions of a service used by a UE, according to the invention, wherein the method comprises of the following steps:
step 110: providing a requirement profile related to a service to a network operator and/or towards a service provider by a user, wherein the requirement profile comprises a QoD part and an energy profile part. In particular, a customer can book a QoD service for a specific QoE via a BSS (basic service set) over a API interface with requirement parameters that will be explained below in the context of Fig. 2;
step 120: offering a service to a UE and/or to a user, wherein the service offer matches the requirement profile. In particular, a QoD pre-service usage takes place and an operation system of the network operator can initiate instantiation and/or reservation of the network slice and radio resources that matches the requirement profile in advance;
in the next step, form usage event of the service, the requester network slice and the related QoD service can now be used by the customers by means of their user equipment.

Hence, this new method proposes the creation, definition and/or optimization of specific network slices based on network performance and energy/emission parameters and enable a new way for the customer to select, alter or modify a slice in a dynamic way. Additionally, these parameters can be offered back to the customer to modify or select a different slice.

Fig. 2 shows an exemplary requirement profile 200 that can be associated to a certain service. In the embodiment of Fig. 2, that service relates to a video production service. The requirement profile 200 comprises a QoD part 210 and an energy profile part 220. The network slice needs to be designed in order to match the entries of the requirement profile 200. The QoD part 210 lists values for the minimum resolution video capturing, target resolution, minimum frame rate, a bandwidth and/or processing power of servers of the network of the network operator. The energy profile part 220 lists an emission budget, energy consumption per service, CO2 output, energy sources and/or an energy extract. Providing this requirement profile 200 to the network operator enables the network operator to design the serving network slice for the service accordingly.

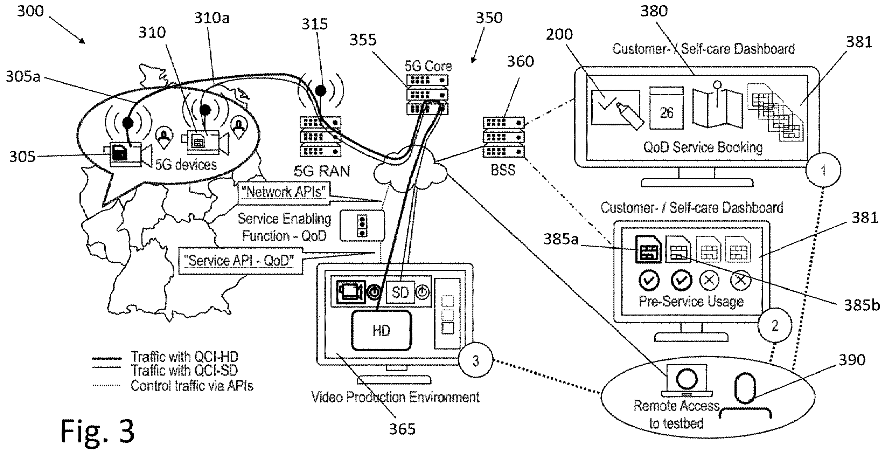

Fig. 3 shows a communication system 300 according to the invention that is configured to carry out the method described above. Fig. 3 illustrates the exemplary case of the service being a video production service.

The communication system 300 comprises of i) a first video camera 305 and a second video camera 310 as user equipment 305, 310, ii) a communication network 350, in particular a 5G communication network 350, of a network operator, wherein the 5G communication network 350 comprises a 5G RAN, a 5G core 355, a BSS 360, and/or a video production environment 365. Network APIs 366, a service enabling function 367, and a service API-QoD 368 can be used to provide the video production environment 365 with the parameters according to the requirement profile 200 to the network operator.

A customer can provide the requirement profile 200 to the network operator by using dedicated APIs. For that purpose, the customer can use a dashboard 381 of a self-service web portal 380 to provide the information to the network operator. The customer can request to initiate the service at the time of creation, usage or request a dynamic modification of the slice, wherein the network slice needs to match the requirement profile 200. Due to the energy profile part 220, it is possible that the network slice can be created taking those emission aspects into account in order to reduce the emission/energy consumption of the service. It is also possible to notify the customer via the dashboard 381 of energy parameters and alternative network slices that have been optimized regarding energy aspects. For example, the customer likes to have a video streaming service or a gaming service with a certain maximum emission so that he accepts a certain reduction of QoS parameters. Offering alternative network slices that reduce emissions and have minimal impact on the QoS can be a very promising business model. As a first alternative: the network slice selection via the API can be done by a custom application without actual human interaction. The application can control the ordering process of the slice via operator API that is automatically triggered by predefined parameters or depending on current quality measurements. As a second alternative: the network operator can select or remodify energy based optimized slices for customers based on their service contracts, for example based on a defined emission budget.

It is also possible that the parameters of the network slice can be exposed via simplified API (for example by the NEF network exposure function) to the customer via the dashboard 381. This API can also include values for maximum or minimum emission values or CO2 budget in a way that it is readable by the customer.

If the network operator is being provided with the requirement profile 200, the network operator can define or create (templates of) new network slices and advertise these new slices to customers, in particular if the customers perform the slice request. It is also possible to expose the emission parameters of the slices. For that purpose, it can be beneficial to simplify the notification and the API interaction due to the needs of the customer.

Since the network operator has knowledge of how to optimize radio (macro cells, micro cells, radio technologies) and core network resources (data center, cloud usage, locational functions, overbooking) for network slices, it is possible that the network operator takes the energy part 220 into account when modifying or creating appropriate network slices by using a dedicated algorithm designed to determine a slice that matches the requirement profile 200.

Hence, the customer but also the network operator or any service provider can dynamically request or modify via the exposed simplified API interface (exposed for example via NEF) the network slice that matches the requirement profile 200. After this step, UEs can use this created or modified network slice for a certain service.

Fig. 3 shows that the video production service is offered on the dashboard 381 to the customer as a first network slice 385a (the bold type) or as a second network slice 385b. The QoS parameters of the first network slice 385a are better than those of the second network slice 385b, so that the former one can facilitate a HD video production and the latter one a SD video production service.

The first video camera 305 uses the first network slice 385a and the second video camera 310 uses the second network slice 385b to capture videos and send the associated video streams 305a, 310a over the radio access network, in particular via 5G cellular communication means, to the 5G RAN. The video streams 305a, 310a travel through the 5G core network 355 of the telecommunication network and arrive at the video production environment 365, wherein the video stream of the first video camera 305 is being processed according to HD standards and wherein the video stream of the second video camera 310 is being processed according to SD standards.

It is also possible that the communication system 300 and provides a remote access 390 to testbed.

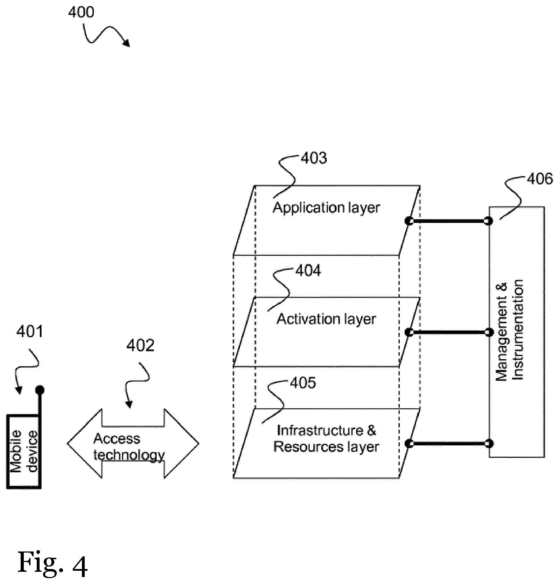

In the following the communication network 350, in particular the embodiment of a 5G radio communication network is being described. The principles explained also apply to future 6G networks. The principle described within the context of Fig. 4 can be applied to the invention in order to design the network slices according to the requirement profile 200:
The radio communication network 400 may include a network 400 according to a fifth generation (5G) or according to a further generation like 6G, e.g. a network 400 described below with respect to Figure 4. At least parts of the invention may be implemented as a virtual network function of an activation layer of the 5G network communicating with a physical layer of the 5G network, e.g. as described below with respect to Figs. 4.

Fig. 4 shows a schematic diagram illustrating an exemplary 5G system architecture 400. The 5G system architecture 400 includes an area with 5G communication terminals 401, which can be connected via different access technologies 402 to a multilayered communication structure. This multilayered communication structure includes an Infrastructure & Resources layer 405, an activation layer 404 and an application layer 403 which are managed by a management & Instrumentation plane 406.

The Infrastructure & Resources layer 405 includes the physical resources of a converged network structure of fixed and mobile network components ("Fixed-Mobile Convergence") with access point, cloud nodes (consisting of processing and storage node), 5G devices such as mobile phones, portable devices, CPEs, machine communication modules and other network nodes and related links. 5G devices can include multiple and configurable capabilities and act, for example, as a relay or hub or can operate depending on the particular context as a computer or memory resource. These resources are provided to the higher layers 404, 403 and the management & Instrumentation layer 406 via corresponding APIs (application program interfaces). Monitoring the performance and the configurations are inherent to such APIs.

The activation layer 404 includes a library of functions that are needed within a converged network in the form of blocks of a modular architecture. These include functions that are implemented in software modules that can be retrieved from a storage location of the desired location, and a set of configuration parameters for specific parts of the network, for example, the radio access. These features and capabilities can be accessed on demand by the management & Instrumentation layer 406 by using the provided APIs. Certain functions may exist in multiple variants, for example, different implementations of the same functionality having different performance or characteristic.

The application layer 403 includes specific applications and services of the network operator, the company, the vertical operator or by third parties (service providers) who use the 5G network. The interface to the management & Instrumentation layer 406 allows to use certain dedicated network slices for an application, or to assign an application to an existing network slice.

The management & Instrumentation layer 406 is the contact point for the required use cases (use cases, business models) to put into actual network functions and slices. It defines the network slices for a given application scenario, concatenates the relevant modular network functions, assigns the relevant performance configurations and maps all to the resources of the infrastructure & resources layer 405. The management & Instrumentation layer 406 also manages the scaling of the capacity of these functions as well as their geographical distribution. In certain applications, the management & Instrumentation layer 406 may also have skills that allow third parties to produce and manage their own network slices by the use of APIs. Because of the numerous tasks of the management & Instrumentation layer 406, these are not a monolithic block of functionality but rather a collection of modular functions, integrating progresses that have been achieved in different network domains, such as NFV (network function virtualization), SDN (software-defined networking) or SON (self-organizing networks). The management & Instrumentation Layer 106 utilizes data assisted intelligence to optimize all aspects of service assembly and deployment.

The 5G network 400 increases the efficiency of communication and provides in particular a higher data throughput, lower latency, particularly high reliability, a much higher connection density and a larger mobility area. The 5G network 400 increases the operational flexibility and provides tailored features and functions while saving network resources. This increased performance is accompanied by the ability to control highly heterogeneous environments and the ability to secure trust, identity and privacy of users. The presented devices, systems and methods are provided for the purpose to improve the efficiency of communication and charging in communication networks, in particular in 5G communications networks with multiple network slices, as described below.

Hence, the requirement profile can be provided to the management & Instrumentation layer 406, wherein the algorithm described above run on the management & Instrumentation layer 406 to determine a network slice that matches the requirement profile 200. The management & Instrumentation layer 406 than creates the slice by setting up the infrastructure & resources layer 405, the activation layer 404 and the application layer 403 accordingly.

## Claims

1. A method to reduce energy emissions of a service used by a UE, wherein the method comprises the following steps:
• providing a requirement profile related to a service to a network operator and/or towards a service provider by a user, wherein the requirement profile comprises a QoD part and an energy profile part;
• offering a service to a UE, wherein the service offer matches the requirement profile.

2. The method of claim 1, wherein the network operator and/or the service provider selects and/or optimizes the following units and/or functionalities of a telecommunication network that provide the service to match the requirement profile
• a radio technology used to exchange data relating to the service,
• core network elements,
• location of deployment,
• computational power, and/or
• energy sources.

3. The method of any of the claims, wherein the network operator and/or the service provider selects and/or adjusts the following QoS performance parameters related to the service to match the requirement profile
• bandwidth,
• latency,
• resolution, and/or
• frame rate.

4. The method of any of the claims 2 to 3, wherein the network operator and/or the service creates a network slice of the telecommunication network to match the requirement profile.

5. The method of claim 4, wherein the creation of the network slice includes setting up and/or arranging functions of the slice in order to match the requirement profile.

6. The method of any of the claims 4-5, wherein a notification means signal the availability of slices, in particular of the newly created slices, to the UE together with the energy profile for slice.

7. The method of any of the claims 3 and 4 to 6, wherein new slices, in particular further new slices, are created to dynamically upscale or downscale the QoS performance parameters of the slice for the service.

8. The method of any of the claims, wherein the QoD part comprises
• bandwidth values,
• latency values,
• resolution values,
• frame rate values, and/or
• a time window values.

9. The method of claim 8, wherein the QoD part values are minimum values and/or ranges.

10. The method of any of the claims 8 to 9, wherein time window value specifies when the service has to be finished.

11. The method of any of the claims, wherein the energy profile part comprises
• emission budget,
• energy consumption per service,
• CO2 output,
• energy budget,
• energy sources, and/or
• energy mixture.

12. The method of any of the claims, wherein the provided service matches the requirement profile at a certain time point.

13. A UE configured to provide a requirement profile related to a requested service to a network operator and/or towards a service provider, wherein the requirement profile comprises a QoD part and an energy profile part.

14. A Network, in particular a telecommunication network of a network operator, configured
• to obtain a requirement profile related to a service, wherein the requirement profile comprises a QoD part and an energy profile part;
• to offer offering a service to a UE, wherein the service offer matches the requirement profile.

15. The network of claim 14, wherein the network is a 5G network or 6G network and is configured to create a new network slice that matches the requirement profile.

## Amended claims

### Amended claims in accordance with Rule 137(2) EPC.

1. A method to reduce energy emissions of a service used by a UE,
wherein the method comprises the following steps:
• providing a requirement profile related to a service to a network operator and/or towards a service provider by a user, wherein the requirement profile comprises a QoD part and an energy profile part;
• offering a service to a UE, wherein the service offer matches the requirement profile.

2. The method of claim 1, wherein the network operator and/or the service provider selects and/or optimizes the following units and/or functionalities of a telecommunication network that provide the service to match the requirement profile
• a radio technology used to exchange data relating to the service,
• core network elements,
• location of deployment,
• computational power, and/or
• energy sources.

3. The method of any of the claims, wherein the network operator and/or the service provider selects and/or adjusts the following QoS performance parameters related to the service to match the requirement profile
• bandwidth,
• latency,
• resolution, and/or
• frame rate.

4. The method of any of the claims 2 to 3, wherein the network operator and/or the service creates a network slice of the telecommunication network to match the requirement profile.

5. The method of claim 4, wherein the creation of the network slice includes setting up and/or arranging functions of the slice in order to match the requirement profile.

6. The method of any of the claims 4-5, wherein a notification means signal the availability of slices to the UE together with the energy profile for slice.

7. The method of any of the claims 3 and 4 to 6, wherein new slices are created to dynamically upscale or downscale the QoS performance parameters of the slice for the service.

8. The method of any of the claims, wherein the QoD part comprises
• bandwidth values,
• latency values,
• resolution values,
• frame rate values, and/or
• time window values.

9. The method of claim 8, wherein the QoD part values are ranges and/or minimum values.

10. The method of any of the claims 8 to 9, wherein time window value specifies when the service has to be finished.

11. The method of any of the claims, wherein the energy profile part comprises
• emission budget,
• energy consumption per service,
• CO2 output,
• energy budget,
• energy sources, and/or
• energy mixture.

12. The method of any of the claims, wherein the provided service matches the requirement profile at a certain time point.

13. A UE configured to provide a requirement profile related to a requested service to a network operator and/or towards a service provider, wherein the requirement profile comprises a QoD part and an energy profile part.

14. A Network configured
• to obtain a requirement profile related to a service, wherein the requirement profile comprises a QoD part and an energy profile part;
• to offer offering a service to a UE, wherein the service offer matches the requirement profile.

15. The network of claim 14, wherein the network is a 5G network or 6G network and is configured to create a new network slice that matches the requirement profile.
